# EUROPÄISCHE PATENTSCHRIFT

(11) **EP 1 373 049 B1**
(45) Veröffentlichungstag und Bekanntmachung des Hinweises auf die Patenterteilung: **12.12.2007**
(21) Anmeldenummer: 02740240.3
(22) Anmeldetag: 02.04.2002
(51) Int. Cl.: B62B 7/08

(54) **TRANSPORTWAGEN**
TRANSPORT TROLLEY
CHARIOT DE TRANSPORT

(30) Priorität: 30.03.2001 DE 10117267
(43) Veröffentlichungstag der Anmeldung: 02.01.2004
(73) Patentinhaber: Kinzel, Joern, 10717 Berlin (DE)
(72) Erfinder: Kinzel, Joern, 10717 Berlin (DE)
(74) Vertreter: Jungblut, Bernhard Jakob
(86) Internationale Anmeldenummer: PCT/DE2002/001275
(87) Internationale Veröffentlichungsnummer: WO 2002/094633

(56) Entgegenhaltungen:
- US-A- 2 976 912
- US-A- 3 937 485
- US-A- 4 335 900
- US-A- 4 659 096
- US-A- 5 076 599
- US-A- 6 017 051

## Beschreibung

Die Erfindung betrifft einen Transportwagen für den Transport von Personen, insbesondere für den Transport von Kindern, mit den Merkmalen nach dem Oberbegriff des Anspruchs 1.

Ein derartiger Transportwagen umfasst einen aus Verstrebungselementen aufgebauten Wagenrahmen und mindestens drei am Wagenrahmen vorgesehene Rolleinrichtungen mit Rädern zum Rollen des Transportwagens entlang einer Transportrichtung auf einem Untergrund, wobei eine der Rolleinrichtungen als vordere Rolleinrichtung bezogen auf die Transportrichtung des Transportwagens vor den anderen beiden, hinteren Rolleinrichtung am Wagenrahmen angeordnet ist. Weiterhin lässt sich der Radstand zwischen der vorderen Rolleinrichtung und den hinteren Rolleinrichtungen durch eine Verstelleinrichtung des Wagenrahmens einstellen.

Aus den Patentschriften US 2,976,912 und US 6,017,051, welche einen Transportwagen gemäß dem Oberbegriff des Anspruchs 1 zeigt, sind jeweils gattungsgemäße Kinderwagen bekannt, deren Radstand zwischen vorderen und hinteren Rolleinrichtungen sich je nach vorliegenden Umgebungsbedingungen anpassen lässt. In den Patentschriften US 3,937,485 und US 4,659,096 sind entsprechende Transportwagen für den Transport von Gütern beschrieben.

Diese Transportwagen bringen jedoch dann Probleme mit sich, wenn sie mit höheren Geschwindigkeiten, wie sie beispielsweise beim Joggen oder Inline-Skaten erreicht werden, bewegt werden. Wenn sie, insbesondere auf unebenem Untergrund, ins Kippen geraten und umfallen, besteht die Gefahr der Verletzung der transportierten Person bzw. der Beschädigung des zu transportierenden Guts.

Der Erfindung liegt daher die Aufgabe zu Grunde, einen gattungsgemäßen Transportwagen bereitzustellen, der möglichst universell einsetzbar ist und sich insbesondere für die Bewegung mit höheren Geschwindigkeiten, wie sie beim Joggen einer den Transportwagen schiebenden Person erreicht werden, eignet.

Diese Aufgabe wird durch einen Transportwagen mit den Merkmalen des Anspruchs 1 gelöst.

Erfindungsgemäß ist vorgesehen, dass der Wagenrahmen zwei Hauptstreben aufweist, die ausgehend aus dem Bereich oberhalb jeder der beiden hinteren Rolleinrichtungen in Richtung der vorderen Rolleinrichtung im wesentlichen V-förmig zusammenlaufend angeordnet sind und die zwei Hauptstreben im Falle eines Umkippens des Transportwagens als Überrollbügel dienen .

Durch die V-förmige Anordnung der Hauptstreben verjüngt sich das Baumaß des Transportwagens ausgehend von den hinteren Rolleinrichtungen in Richtung der vorderen Rolleinrichtung.

Die Verstelleinrichtung des Wagenrahmens ist bevorzugt als mindestens eine in ihrer Länge verstellbare Schubstrebe des Wagenrahmens ausgebildet. Grundsätzlich wäre ebenso eine Verstelleinrichtung denkbar, die durch Falten oder Verschwenken eines oder mehrerer Rahmenelemente die Verstellung des Radstandes zwischen der vorderen und der hinteren Rolleinrichtung ermöglicht.

Die zur Verstellung des Radstandes bereitgestellte Schubstrebe des Wagenrahmens erstreckt sich bei einer bevorzugten Ausführungsform im wesentlichen horizontal und ist im Bereich zwischen der vorderen Rolleinrichtung und den hinteren Rolleinrichtungen als Verstrebungselement des Wagenrahmens angeordnet. Bei einer geeigneten Ausbildung der übrigen Verstrebungselemente des Wagenrahmens und deren Verbindung über Gelenkeinrichtungen ist dadurch die Einstellung des Radstandes des Transportwagens über die Veränderung der Schubstrebenlänge schnell und unkompliziert möglich.

Die Hauptstreben sind bevorzugt konkav nach oben, d.h. von einer Rolloberfläche des Wagens weggewölbt ausgebildet. Dadurch weist der Wagenrahmen im Bereich zwischen der Rolloberfläche des Wagens und den Hauptstreben genügend Bauraum auf, um die zu transportierende Person und/oder das zu transportierende Gut aufzunehmen.

In einer bevorzugten Ausführungsform weist der Wagenrahmen zwischen den beiden oberhalb der hinteren Rolleinrichtungen angeordneten Endabschnitte der Hauptstreben und den darunter angeordneten hinteren Rolleinrichtungen jeweils eine Stützstrebe auf. Weiterhin ist zwischen der relativ zur Transportrichtung linken Hauptstrebe und der linken Stützstrebe eine linke Schubstrebe und zwischen der rechten Hauptstrebe und der rechten Stützstrebe eine rechte Schubstrebe angeordnet. Zwischen den beiden Stützstreben ist dabei mindestens eine Querstrebe angeordnet. Auf diese Weise spannen die Einzelelemente Haupt-, Schub-, Stütz- und Querstreben des Wagenrahmens einen im wesentlichen pyramidenähnlichen Käfig auf, dessen Spitze bzw. verjüngter Endabschnitt im Bereich der vorderen Rolleinrichtung angeordnet ist.

Die Befestigung der Stützstreben an den Hauptstreben der Schubstreben an den Hauptstreben und der Schubstreben an den Stützstreben ist über Gelenkeinrichtungen gewährleistet. Durch eine geeignete Auswahl und Anordnung der Gelenkeinrichtungen wird gewährleistet, dass der Wagenrahmen falt- klappbar ausgebildet ist, damit der Transportwagen bei Bedarf platzsparend zusammenlegbar ist.

In einer weiteren Ausführungsform weist der Transportwagen Stützstreben auf, die in ihrer Länge verstellbar ausgebildet sind. Durch ein beispielsweise teleskopartiges Verkürzen der Stützstreben lässt sich die Höhe des Transportwagens reduzieren.

Um die Breite des Transportwagens, d.h. den Abstand zwischen den beiden hinteren Rolleinrichtungen, bei Bedarf reduzieren zu können, sind bevorzugt Querstreben vorgesehen, die in ihrer Mitte ein arretierbares Faltgelenk aufweisen, wobei die Endabschnitte der beiden Hauptstreben im Bereich der vorderen Rolleinrichtung zueinander beweglich angelenkt sind. Alternativ wäre ebenso denkbar, dass die Querstreben in ihrer Länge teleskopartig zusammenschiebbar ausgebildet sind.

Dazu ist es besonders vorteilhaft, die Endabschnitte der beiden Hauptstreben im Bereich der vorderen Rolleinrichtung mittels eines Kardangelenkes aneinander zu koppeln.

Eine bevorzugte Ausführungsform des Transportwagens ist dadurch gekennzeichnet, dass die Schubstreben mittels einer entlang der zugeordneten Stützstrebe verschiebbaren und an der Stützstrebe fixierbaren Gelenkeinrichtung an den Stützstreben lösbar fixiert sind. Ebenso ist vorteilhaft, dass die Stützstreben mittels einer entlang der zugeordneten Hauptstrebe verschiebbaren und an der Hauptstrebe fixierbaren Gelenkeinrichtung an den Hauptstreben lösbar fixiert sind. Durch das Lösen der die Schubstreben mit dem Stützstreben verbindenden Gelenkeinrichtungen lassen sich die Gelenkeinrichtungen und somit die Endabschnitte der Schubstreben entlang der Stützstreben nach oben in den Bereich des Drehgelenkes zwischen Stützstrebe und Hauptstrebe verschieben. In einem zweiten Schritt lassen sich danach die an den Stützstreben angeordneten hinteren Rolleinrichtungen in Richtung der vorderen Rolleinrichtung vorklappen. Auf diese Weise ist ein platzsparendes Zusammenklappen des Transportwagens schnell und unkompliziert möglich.

Der Transportwagen weist bevorzugt eine Aufnahmeeinrichtung für ein zu transportierendes Gut und/oder eine zu transportierende Person auf, die an den Schubstreben und/oder an den Hauptstreben fixiert ist. Diese Aufnahmeeinrichtung ist entweder derart faltbar ausgebildet, dass sie sich gemeinsam mit dem Wagenrahmen zusammenklappen lässt, oder sie ist lösbar am Wagenrahmen fixiert, so dass sie sich vor dem Zusammenklappen des Wagenrahmens entfernen lässt.

Mindestens eine der Rolleinrichtungen weist bevorzugt eine Federungsvorrichtung auf. Die Federungsvorrichtung dient insbesondere bei der Fortbewegung des Transportwagens auf unebenen Untergründen zur Aufnahme der dabei entstehenden Erschütterungskräfte. Dazu weist die Federungsvorrichtung bevorzugt einen Federweg auf, der mindestens ein Fünftel des Raddurchmessers des der Rolleinrichtung zugeordneten Rades beträgt. Dies hat den Vorteil, dass sich der Transportwagen auch im Laufschritttempo durch unwegsames, d.h. unebenes Gelände bewegen lässt, ohne dass es für die zu transportierende Person und/oder das zu transportierende Gut zu unverträglichen Erschütterungen kommt.

Eine bevorzugte Ausführungsform des Transportwagens ist dadurch gekennzeichnet, dass die Hauptstreben und/oder die Stützstreben oberhalb der hinteren Rolleinrichtungen mindestens eine Griffeinrichtung zum Halten und Lenken des Transportwagens aufweist. Diese Griffeinrichtung lässt sich zur Anpassung an die Körpergröße einer den Transportwagen bewegenden Person höhenverstellbar ausbilden.

Eine weitere bevorzugte Ausführungsform des Transportwagens ist dadurch gekennzeichnet, dass mindestens eine der Rolleinrichtungen eine Bremsvorrichtung zum Abbremsen der Rollbewegung des Transportwagens aufweist und dass die Bremsvorrichtung mittels einer im Bereich der Griffeinrichtung angeordneten Betätigungsvorrichtung auslösbar ist. Als Bremsvorrichtung sind dabei alle üblichen und bekannten Bremsvorrichtungen, wie Felgenbremsen, Trommelbremsen und Scheibenbremsen denkbar. Dazu ist es vorteilhaft, wenn die Verbindungsleitungen zwischen der im Bereich der Griffelemente angeordneten Betätigungsvorrichtung und der Bremsvorrichtung im Inneren der Haupt- bzw. Stützrohre angeordnet sind.

Um den Transportwagen beispielsweise in einer Parkposition vor ungewolltem Wegrollen zu sichern, ist es vorteilhaft, dass die Bremsvorrichtung mittels der zugeordneten Betätigungsvorrichtung feststellbar ausgebildet ist. Ergänzend oder alternativ lässt sich eine zusätzliche Rastvorrichtung im Bereich einer Rolleinrichtung vorsehen, die bei einem stehenden Transportwagen betätigbar ist und das Drehen der Räder verhindert.

Eine weitere bevorzugte Ausführungsform des Transportwagens ist dadurch gekennzeichnet, dass die vordere Rolleinrichtung um eine im wesentlichen senkrecht angeordnete Achse drehbar am Wagenrahmen gelagert ist. Durch eine derartige drehbar gelagerte vordere Rolleinrichtung lässt sich der Transportwagen mit wenig Kraftanstrengung auf einem kleinen Wendekreis drehen.

Die vordere Rolleinrichtung ist bevorzugt in einem Winkelbereich kleiner als 180° drehbar gelagert. Weiterhin weicht die vordere Rolleinrichtung eine mechanische Rückführungseinrichtung auf, die auf das mindestens eine, der vorderen Rolleinrichtung zugeordnete Rad beim Herausschwenken aus einer im wesentlichen parallel zur Laufrichtung der Räder der hinteren Rolleinrichtungen ausgerichteten Grundstellung ein auf die Grundstellung zurückgerichtetes Drehmoment ausübt.

Dadurch wird erreicht, dass zum Auslenken des drehbar gelagerten Rades der vorderen Rolleinrichtung ein Drehmoment erforderlich ist, das über der durch die Rückführungseinrichtung vorgegebenen Drehmomentschwelle liegen muss. Diese Eigenschaft ist insbesondere bei der Bewegung des Transportwagens in unwegsamem Gelände von Bedeutung, damit nicht die durch Unebenheiten des Untergrundes entstehenden Drehmomente zu einer unerwünschten Lenkbewegung des Transportwagens führen, die die den Wagen bewegende Person durch ein entsprechendes Gegenlenken ausgleichen müsste.

Eine weitere bevorzugte Ausführungsform des Transportwagens weist im Bereich der Stützstreben Koppelelemente zur Ankopplung eines Rollstuhles auf, damit der Transportwagen durch eine in einem Rollstuhl fahrende Person beweg- und lenkbar ist. Dadurch lässt sich der Transportwagen für Rollstuhlfahrer insbesondere für den Transport zusätzlicher Gegenstände verwenden.

Eine weitere bevorzugte Ausführungsform des Transportwagens ist dadurch gekennzeichnet, dass die vordere Rolleinrichtung nach oben verschwenkbar und in einer verschwenkten Position fixierbar am Wagenrahmen angelenkt ist. Bevorzugt sind am Wagenrahmen im Bereich der vorderen Rolleinrichtung zusätzliche Kupplungsmittel für das Ankoppeln des Transportwagens an ein Zugfahrzeug, insbesondere an ein Fahrrad, befestigbar. Auf diese Weise lässt sich der Transportwagen einfach und unkompliziert als Fahrradanhänger verwenden. Über die verstellbaren Schubstreben des Wagenrahmens lässt sich dabei die Länge des Fahrradanhängers variieren.

Außerdem lässt sich der Wagenrahmen des Transportwagens auf ein noch kleineres Packmaß zusammenfalten, wenn dabei die vordere Rolleinrichtung nach oben in Richtung des durch die Verstrebungselemente aufgespannten pyramidenähnlichen Käfigs verschwenkt und am Wagenrahmen fixiert ist.

Zusätzlich ist denkbar, die Beabstandung der hinteren Rolleinrichtungen zur Erhöhung der Kippsicherheit des Transportwagens beim Einsatz als Fahrradanhänger durch eine geeignete Vorrichtung zu vergrößern.

Weitere Aspekte und Vorteile des erfindungsgemäßen Transportwagens werden im Folgenden anhand der Figuren erläutert.

Es zeigen:
- Figur 1: eine perspektivische Ansicht einer ersten Ausführungsform des Transportwagens;
- Figur 2: eine perspektivische Ansicht des Transportwagens aus Figur 1, wobei der Radstand im Vergleich zu Figur 1 verkürzt ist;
- Figur 3: eine perspektivische Ansicht des Transportwagens aus Figur 1, wobei die vordere Rolleinrichtung zur Nutzung des Transportwagens als Fahrradanhänger nach oben verschwenkt und am Wagenrahmen fixiert ist;
- Figur 4: eine perspektivische Ansicht des Transportwagens aus Figur 1, wobei am Wagenrahmen eine Aufnahmevorrichtung für eine zu transportierende Person angebracht ist;
- Figur 5: eine perspektivische Ansicht des Transportwagens aus Figur 1, wobei am Wagenrahmen eine Aufnahmevorrichtung für ein zu transportierendes Gut angebracht ist;
- Figur 6a: eine perspektivische Ansicht des Transportwagens aus Figur 1, wobei die beiden hinteren Rolleinrichtungen durch das Zusammenklappen der Querstreben enger zueinander geführt sind;
- Figur 6b: eine zweite Ausführungsform des in Figur 6a gezeigten Transportwagens, der teleskopartig in der Länge einstellbare Stützstreben aufweist;
- Figur 6c: eine Detailansicht der hinteren Rolleinrichtungen mit einer weiteren Ausführungsform des Klappmechanismus der Querstreben;
- Figur 7a: den Transportwagen aus Figur 6a, wobei die Anlenkpunkte der beiden Schubstreben an den Stützstreben nach oben verschoben sind;
- Figur 7b: den Transportwagen aus Figur 6b, wobei die Stützstreben und die Schubstreben in ihrer Länge verkürzt sind;
- Figur 8a: den Transportwagen aus Figur 7a, wobei die hinteren Rolleinrichtungen durch Verschwenken der Stützstreben in den Bereich der vorderen Rolleinrichtung vorgeklappt sind;
- Figur 8b: den Transportwagen aus Figur 7b, wobei die hinteren Rolleinrichtungen durch Verschwenken der Stützstreben in den Bereich der vorderen Rolleinrichtung vorgeklappt sind;
- Figur 9: eine Detailansicht einer hinteren Rolleinrichtung mit Federvorrichtung und Bremsvorrichtung und
- Figur 10: eine Detailansicht einer drehbar am Wagenrahmen angeordneten vorderen Rolleinrichtung mit einer mechanischen Rückführeinrichtung der Rolleinrichtung.

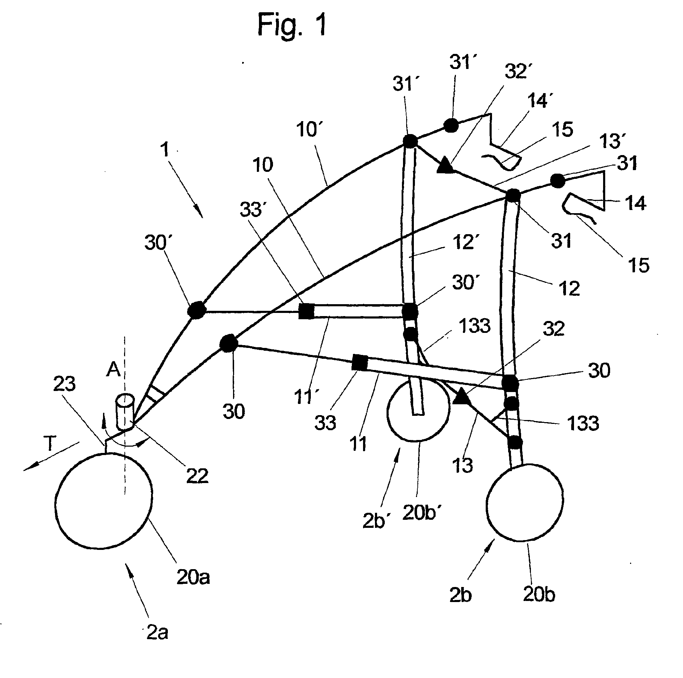

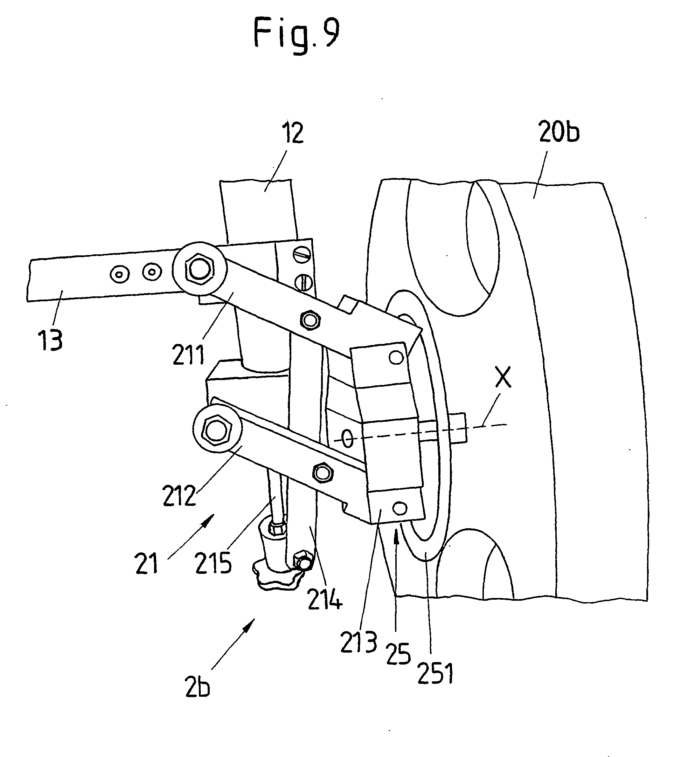

Figur 1 zeigt eine perspektivische Ansicht einer ersten Ausführungsform des Transportwagens. Der Transportwagen umfasst einen aus Verstrebungselementen 10, 10', 11, 11', 12, 12', 13, 13', 133 aufgebauten Wagenrahmen 1, an dem drei Rolleinrichtungen 2a, 2b, 2b' angeordnet sind. Jede der drei Rolleinrichtungen 2a, 2b, 2b' weist ein Rad 20a, 20b, 20b' auf. Mittels der Räder 20a, 20b, 20b' ist der Transportwagen 1 auf einem Untergrund in Richtung einer Transportrichtung T rollbar. Relativ zur Transportrichtung T ist eine der Rolleinrichtungen als vordere Rolleinrichtung 2a und die beiden anderen der Rolleinrichtungen als hintere Rolleinrichtungen 2b, 2b' am Wagenrahmen 1 angeordnet. Jede der drei Rolleinrichtungen 2a, 2b, 2b' weist eine in Figur 1 nicht dargestellte Federungseinrichtung 21 auf, die in Figur 9 detailliert dargestellt ist.

Selbstverständlich ist vorstellbar, dass ein erfindungsgemäßer Transportwagen mehr als drei Rolleinrichtungen aufweist. Es ist klar, dass sich eine Rolleinrichtungen mit mehr als einem Rad, beispielsweise mit einer Zwillingsbereifung, ausbilden lässt.

Die in Figur 1 dargestellte Ausführungsform des Transportwagens stellt aufgrund der dreieckigen Anordnung der drei Rolleinrichtungen lediglich eine bevorzugte, besonders kompakte Ausführungsform des erfindungsgemäßen Transportwagens dar.

Der Wagenrahmen 1 weist ausgehend von dem Bereich oberhalb jeder der beiden hinteren Rolleinrichtungen 2b, 2b' zwei Hauptstreben 10, 10' auf, die in Richtung der vorderen Rolleinrichtung 2a im wesentlichen V-förmig zusammenlaufend angeordnet sind. Im Bereich oberhalb der hinteren Rolleinrichtungen 2b, 2b' sind an die Hauptstreben 10, 10' im wesentlichen senkrecht verlaufende Stützstreben 12, 12' über Gelenkeinrichtungen 31, 31' an den Hauptstreben 10, 10' angelenkt. Ausgehend aus den, den hinteren Rolleinrichtungen 2b, 2b' zugewandten Endbereichen der Stützstreben 12, 12', verlaufen Schubstreben 11, 11' zwischen den Stützstreben 12, 12' und den der vorderen Rolleinrichtung 2a zugewandten Endbereichen der Hauptstreben 10, 10'. Die Schubstreben 11, 11' sind an den Hauptstreben 10, 10' und an den Stützstreben 12, 12' mittels Gelenkeinrichtungen 30, 30' befestigt.

Die Gelenkeinrichtungen 30, 30' lassen sich jeweils zusammen mit der zugeordneten Schubstrebe 11, 11' entlang der Hauptstreben 10, 10' bzw. der Stützstreben 12, 12' bewegen und fixieren. Dadurch sind die durch die Gelenkeinrichtungen 30, 30' definierten Anlenkpunkte der Schubstreben 11, 11' an den Hauptstreben 10, 10' bzw. an den Stützstreben 12, 12' einstellbar.

Die Schubstreben 11, 11' umfassen jeweils zwei Teilstreben und eine Justageeinrichtung 33, 33'. Die zwei Teilstreben lassen sich teleskopartig derart ineinander bewegen, dass sich dadurch die Gesamtlänge der Schubstreben 11, 11' verändert und mittels der Justageeinrichtung 33, 33' ist eine eingestellte Länge der Schubstreben 11, 11' fixierbar. Auf diese Weise lässt sich der Radstand, d.h. der Abstand zwischen dem vorderen Rad 20a und der Mitte der imaginären Verbindungslinie zwischen den beiden hinteren Rädern 20b, 20b' variieren. Diese Schubstreben 11, 11' stellen somit eine mögliche Ausführungsform der Verstelleinrichtung des Wagenrahmens 1 zur Einstellung des Radstandes zwischen der vorderen Rolleinrichtung und den hinteren Rolleinrichtungen dar.

Die Justageeinrichtungen 33, 33' sind beispielsweise als Schraub-Klemmverbinder ausgebildet, die ein stufenloses Einstellen der Länge der Schubstreben 11, 11' ermöglichen. Es ist jedoch ebenso denkbar, dass die Justageeinrichtung 33, 33' als arretierbarer Bolzen ausgebildet ist, der durch korrespondierende Bohrungen der beiden teleskopartig ineinander verschiebbaren Teilelemente der Schubstreben 11, 11' derart hindurchführbar ist, dass der Bolzen eine eingestellte Länge der Schubstrebe 11, 11' fixiert. Bei dieser Ausführungsform ist lediglich eine stufenweise Längenverstellung der Schubstreben 11, 11' im Abstandsmaß der Bohrungen in den beiden Teilstreben der Schubstreben 11, 11' möglich.

Zwischen den beiden im wesentlichen parallel zueinander angeordneten Stützstreben 12, 12' verläuft im Bereich der Hauptstreben 10, 10' eine im wesentlichen horizontal angeordnete erste Querstrebe 13'. Im Bereich der hinteren Rolleinrichtungen 2b, 2b' eine zweite Querstrebe 13. Die Querstreben 13, 13' weisen jeweils in ihrer Mitte ein arretierbares Faltgelenk 32, 32' auf.

Die Faltgelenke 32, 32' sind derart ausgebildet, dass sie die Querstreben 13, 13' in zwei gleichlange Teilelemente aufteilen, die sich nach dem Lösen der Arretierung der Faltgelenke 32, 32' zueinander klappen lassen.

Zur Aussteifung des durch die Hauptstreben 10, 10', die Schubstreben 11, 11', die Stützstreben 12, 12' und die Querstreben 13, 13' aufgespannten Wagenrahmen 1 weist die untere Querstrebe 13 zwei Stabilisierungsarme 133 auf. Die Stabilisierungsarme 133 verlaufen aus den, den Stützstreben 12, 12' zugewandten Endbereichen der unteren Querstrebe 13 schräg nach oben an die Stützstreben 12, 12'. Dadurch wird das durch die Stützstreben 12, 12' und die Querstreben 13, 13' aufgespannte Rechteck und somit der gesamte Wagenrahmen 1 gegen eine Verscherung ausgesteift.

Die Verstrebungselemente 10, 10', 11, 11', 12, 12', 13, 13', 133 bilden einen Wagenrahmen 1, der einen pyramidenähnlichen Käfig aufspannt, wobei die rechteckige Basisfläche dieses pyramidenähnlichen Käfigs durch die Stützstreben 12, 12' und die Querstreben 13, 13' gebildet wird. Die sich ausgehend von den Stützstreben 12, 12' in den Bereich der vorderen Rolleinrichtung 2a erstreckenden Hauptstreben 10, 10' und Schubstreben 11, 11' bilden dabei die Kanten des pyramidenähnlichen Käfigs. Die "Höhe" der Pyramide lässt sich dabei durch die variable Längenverstellung der Schubstreben 11, 11' variieren. Innerhalb des Rahmenkäfigs lässt sich die zu transportierende Person und/oder das zu transportierende Gut mit einer am Wagenrahmen 1 befestigen, geeigneten Aufnahmeeinrichtung fixieren. Aufgrund der konkaven nach oben gerichteten Krümmung der Hauptstreben 10, 10' wird der von den Verstrebungselementen umschlossene Raum noch etwas vergrößert. Außerdem erfüllen die Hauptstreben 10, 10' eine Schutzfunktion, indem sie im Falle eines Umkippens des Transportwagens als Überrollbügel dienen. Außerdem ist es möglich, entlang der Hauptstreben 10, 10' ein Sonnen- oder Regenverdeck anzuordnen, dass beispielsweise mittels Klettverschlüssen oder Gummibändern lösbar am Wagenrahmen 1 fixiert ist.

An den der vorderen Rolleinrichtung 2a zugewandten Enden der Hauptstreben 10, 10' ist eine Lagereinrichtung 22 angeordnet, in der ein Lagerarm 23 um eine im wesentlichen senkrecht angeordnete Lenkachse A drehbar gelagert ist. An dem der Lagereinrichtung 22 abgewandten Ende des Lagerarms 23 ist die vordere Rolleinrichtung 2a angeordnet. Somit ist das Rad 20a der vorderen Rolleinrichtung 2a über den Lagerarm 23 um die Lenkachse A drehbar am Wagenrahmen 1 gelagert.

An den der Lagereinrichtung 22 abgewandten Enden der Hauptstreben 10, 10' sind über fixierbare Drehgelenke 31, 31' Griffeinrichtungen 14, 14' befestigt. Die Griffeinrichtungen 14, 14' dienen einer den Transportwagen bewegenden Person zum Schieben bzw. Ziehen und Lenken des Transportwagens. Die den Griffeinrichtungen 14, 14' zugeordneten Drehgelenke 31, 31' sind derart ausgebildet, dass sie eine Höhenverstellung der Griffeinrichtungen 14, 14' zur Anpassung an die Körpergröße einer den Transportwagen bewegenden Person ermöglichen. Weiterhin weisen die Griffeinrichtungen 14, 14' jeweils eine als Bremshebel 15 ausgebildete Betätigungsvorrichtung einer in Figur 1 nicht dargestellten Bremseinrichtung an einem der Rolleinrichtungen 2a, 2b, 2b' auf.

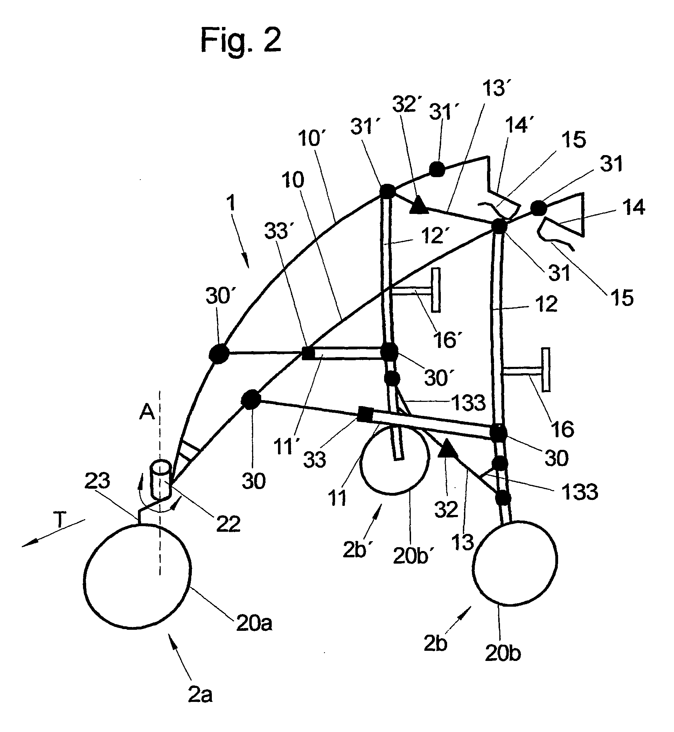

Figur 2 zeigt den Transportwagen aus Figur 1, wobei gleiche Bauelemente mit gleichen Bezugszeichen versehen sind. Im Unterschied zu Figur 1 ist der Transportwagen in Figur 2 mit einem anhand der verstellbaren Schubstreben 11, 11' verkürzten Radstand zwischen dem Vorderrad 20a und den Hinterrädern 20b, 20b' dargestellt.

Auf diese Weise lässt sich die Baulänge des Transportwagens einfach und unkompliziert verkürzen, so dass der Transportwagen, beispielsweise beim Einsatz als Kinderwagen kürzer und somit wendiger ist. Außerdem benötigt der Transportwagen mit dem verkürzten Radstand weniger Stellplatz, was bei Kinderwagen oftmals ein entscheidender Faktor ist.

Weiterhin weisen die beiden Stützstreben 12, 12' in Figur 2 zwei Koppelelemente 16, 16' für die Ankopplung des Transportwagens an einen Rollstuhl auf.

Auf diese Weise lässt sich der Transportwagen mit einem Rollstuhl koppeln, so dass einer auf einen Rollstuhl angewiesenen Person mittels des Transportwagens eine zusätzliche Transportmöglichkeit für eine Person und/oder eine zu transportierendes Gut gegeben ist.

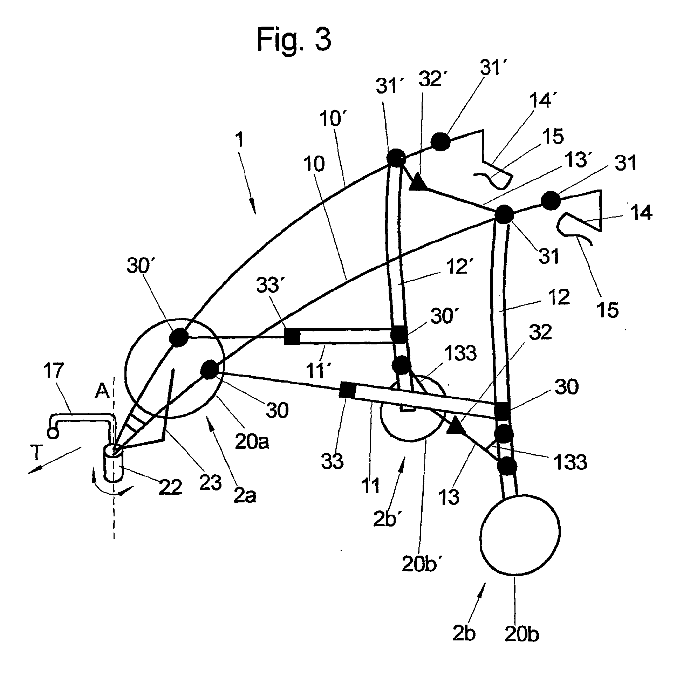

Figur 3 zeigt den Transportwagen aus Figur 1, wobei gleiche Bauelemente wiederum mit gleichen Bezugszeichen versehen sind. Im Unterschied zu Figur 1 ist beim Transportwagen in Figur 3 die vordere Rolleinrichtung 2a zusammen mit dem Lagerarm 23 nach oben verschwenkt dargestellt. Die Verschwenkachse des Lagerarms ist dabei im Bereich der, der Lagereinrichtung zugewandten Enden der Hauptstreben 10, 10' im wesentlichen horizontal angeordnet. Das verschwenkte Vorderrad 20a kommt dabei im Bereich der Anlenkpunkte zwischen den Schubstreben 11, 11' und den Hauptstreben 10, 10' zu liegen. Die vordere Rolleinrichtung 2a ist in der verschwenkten Position durch nicht dargestellte Fixiermittel gegen ein unerwünschtes Zurückrollen am Wagenrahmen 1 gesichert. Zusätzlich weist der Wagenrahmen 1 im Bereich der Lagereinrichtung 22 der vorderen Rolleinrichtung 2a ein Kupplungsmittel 17 auf, das das Ankoppeln des Transportwagens an ein Zugfahrzeug, insbesondere an ein Fahrrad, ermöglicht.

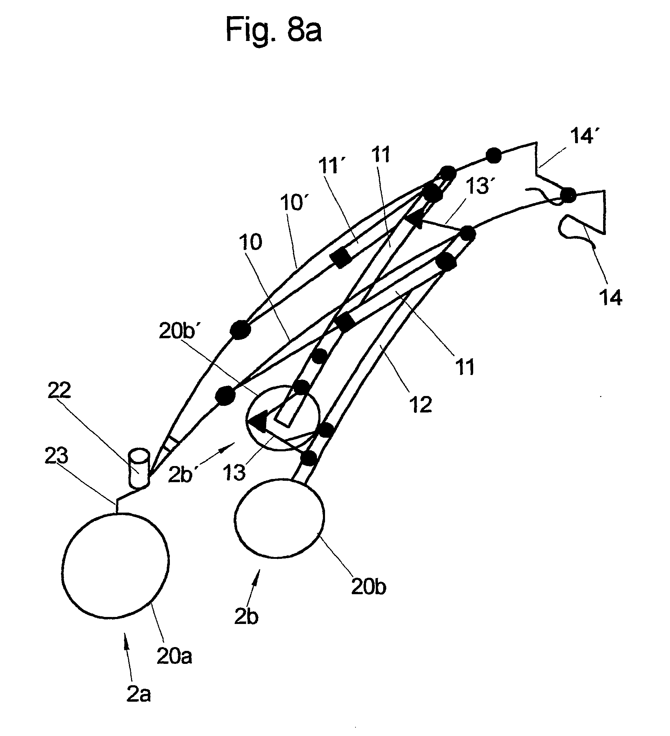

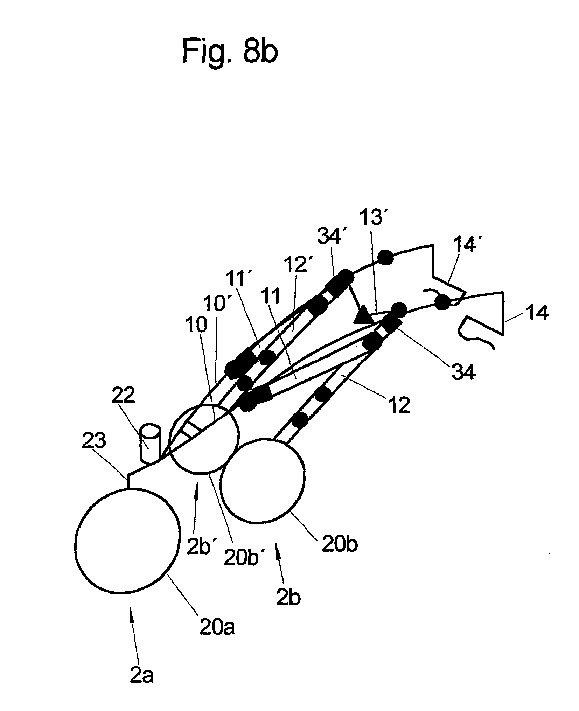

Durch das Hochschwenken der vorderen Rolleinrichtung 2a lässt sich der Transportwagen schnell und unkompliziert in einen Anhänger umwandeln. Für die Verwendung des Transportwagens als Anhänger ist es vorteilhaft, die hinteren Rolleinrichtungen 2b, 2b' derart auszubilden, dass sich der Abstand zwischen den hinteren Räder 20b, 20b' vergrößern lässt, um das Kippmoment des als Anhänger genutzten Transportwagens zu erhöhen. Außerdem ermöglicht das zusätzliche Verschwenken der vorderen Rolleinrichtung 2a, den Wagenrahmen 1 des Transportwagens noch kleiner zusammenzufalten als es in den Figuren 8a und 8b dargestellt ist.

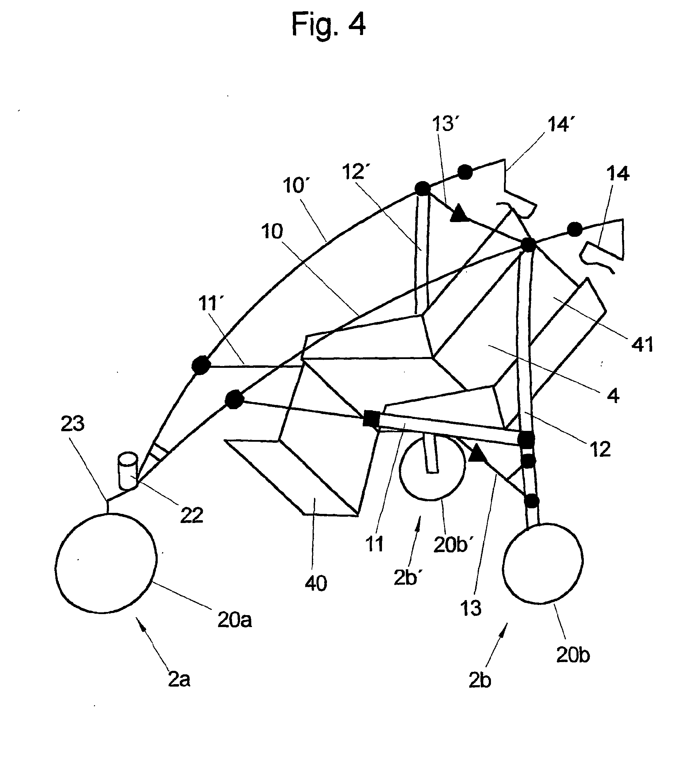

In Figur 4 ist der Transportwagen aus Figur 1 dargestellt, wobei im Unterschied zu Figur 1 eine Aufnahmeeinrichtung 4 für eine zu transportierende Person am Wagenrahmen 1 angeordnet ist. Insbesondere für die Verwendung des Transportwagens als Kinderwagen ist die Aufnahmeeinrichtung 4 als geeigneter Kindersitz mit höhenverstellbarer Fußstütze 40 und in der Neigung verstellbarer Rückenlehne 41 ausgebildet.

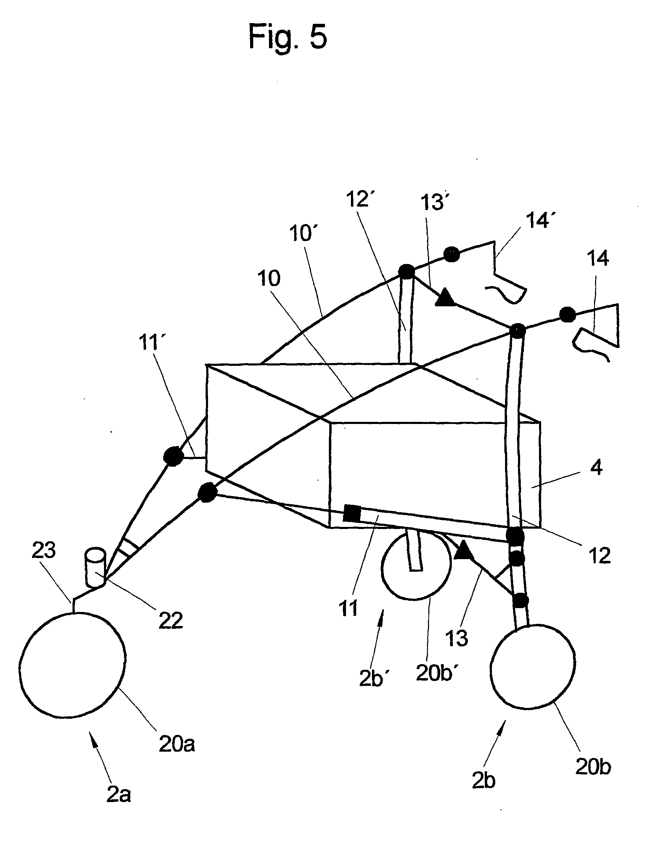

In Figur 5 ist im Unterschied zu der Darstellung in Figur 4 alternativ eine Aufnahmevorrichtung 4 für ein im Transportwagen zu transportierendes Gut dargestellt.

Die Aufnahmevorrichtung 4 lässt sich selbstverständlich auf die spezifischen Eigenschaften und Ausmaße des zu transportierenden Gutes anpassen. Es lassen sich daher speziell auf das zu transportierende Gut abgestimmte Befestigungsmittel vorsehen. Als Beispiel wären auf eine Getränkekiste oder eine Golftasche abgestimmte Befestigungsmittel denkbar.

Es ist selbstverständlich, dass sich die Aufnahmevorrichtung 4 auch für einen kombinierten Transport von Personen und Gütern ausbilden lässt.

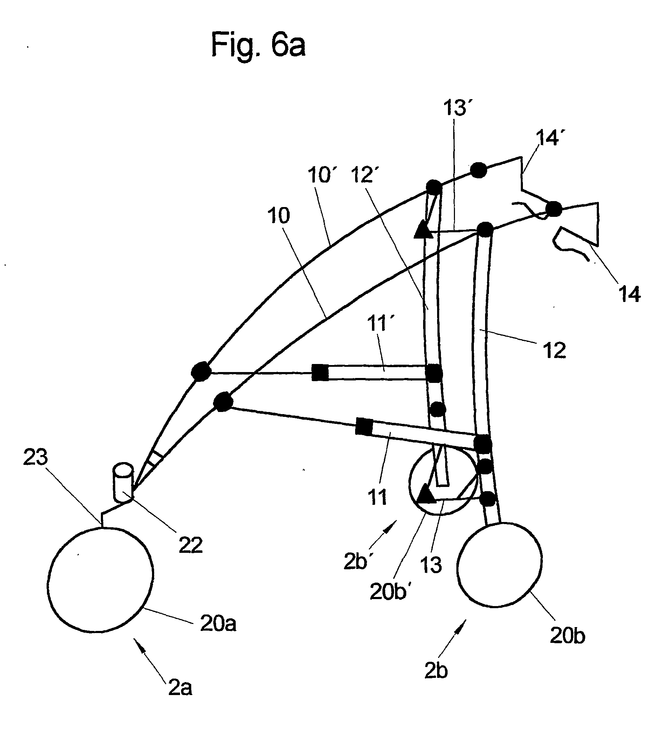

In den Figuren 6a bis 8b wird der Klappmechanismus zweier unterschiedlicher Ausführungsformen des Transportwagens näher erläutert.

Figur 6a zeigt die erste Ausführungsform des Transportwagens aus Figur 1. Im Unterschied zur Figur 1 sind in Figur 6a die Faltgelenke 32, 32' der Querstreben 13, 13' im entriegelten Zustand dargestellt, so dass die in der Mitte der Querstreben 13, 13' angeordneten Faltgelenke 32, 32' ein Zusammenführen der beiden hinteren Rolleinrichtungen 2b, 2b' ermöglichen.

Bei der in Figur 6a gezeigten Ausführungsform lassen sich die Querstreben 13, 13' in einer im wesentlichen horizontal angeordneten Ebene falten.

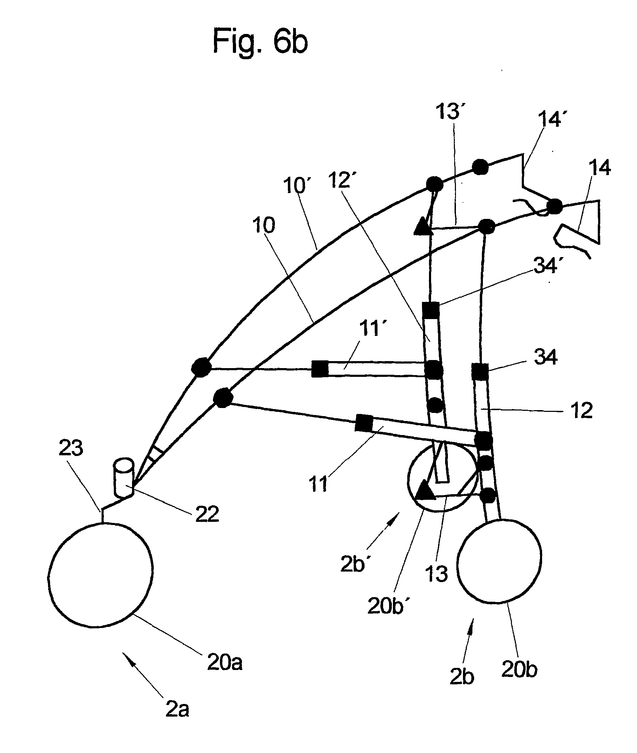

In Figur 6b ist eine zweite Ausführungsform des Transportwagens dargestellt. Im Unterschied zu der in Figur 6a gezeigten ersten Ausführungsform sind die Stützstreben 12, 12' des Wagenrahmens 1 teleskopartig in der Länge verstellbar ausgebildet. Dazu weisen sie ähnlich wie die Schubstreben 11, 11' Justageeinrichtungen 34, 34' zur Längeneinstellung der Stützstreben 12, 12' auf. Zur Ausbildung der teleskopartig verstellbaren Stützstreben 12, 12' und der zugehörigen Justageeinrichtungen 34, 34' ist auf die Ausführungen hinsichtlich der teleskopartig verstellbaren Schubstreben 11, 11' in Figur 1 verwiesen.

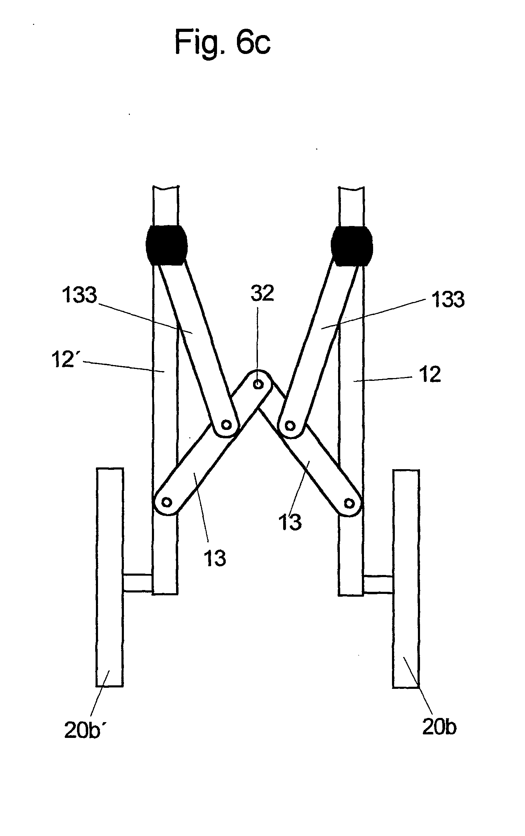

Figur 6c zeigt eine schematische Ansicht der beiden hinteren Rolleinrichtungen 2b, 2b' mit den Stützstreben 12, 12', wobei die untere Querstrebe 13 im Unterschied zu den in den Figuren 6a und 6b gezeigten Ausführungsformen mittels des Faltgelenkes 32 in einer im wesentlichen senkrecht angeordneten Ebene zusammenklappbar ausgebildet ist.

Diese Ausführungsform lässt sich sowohl bei der in Figur 6a als auch in Figur 6b gezeigten Variante des Transportwagens einsetzen.

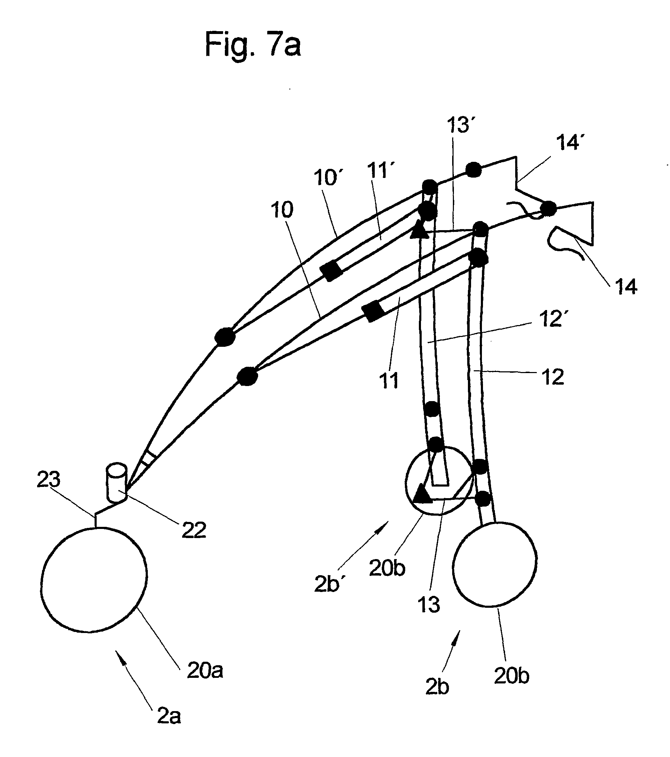

Figur 7a zeigt die erste Ausführungsform des Transportwagens aus Figur 6a. In einem weiteren Schritt des Zusammenklappens des Transportwagens sind in die über die Gelenkeinrichtungen 30, 30' an den Stützstreben 12, 12' definierten Anlenkpunkte der Schubstreben 11, 11' an den Stützstreben 12, 12' in die den Hauptstreben 10, 10' zugewandten Endabschnitten der Stützstreben 12, 12' verschoben. Dabei muss die über die Justageeinrichtungen 33, 33' eingestellte Länge der Schubstreben 11, 11' nicht verändert werden.

Im letzten Schritt der Faltung der aus den Figuren 6a und 7a gezeigten ersten Ausführungsform des Transportwagens werden, wie in Figur 8a gezeigt, die hinteren Rolleinrichtungen 2b, 2b' in Richtung der vorderen Rolleinrichtung 2a um eine durch die Gelenkeinrichtungen 31, 31' zwischen den Stützstreben 12, 12' und den Hauptstreben 10, 10' definierten Schwenkachse verschwenkt. Auf diese Weise lässt sich der Wagenrahmen 1 der ersten Ausführungsform des Transportwagens auf ein kompaktes Maß zusammenfalten.

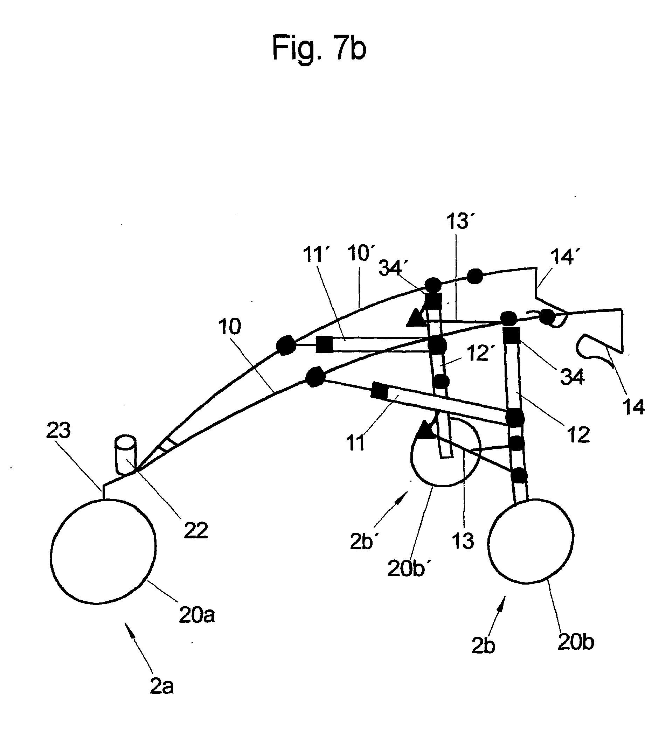

Die Figuren 6b bis 8b zeigen entsprechend den Zusammenklappvorgang des Wagenrahmen 1 der zweiten Ausführungsform des Transportwagens. In Figur 7b ist dargestellt, wie die Stützstreben 12, 12' mittels der Justageeinrichtungen 34, 34' verkürzt werden, so dass sich die Höhe des Transportwagens reduziert. Gleichzeitig lässt sich die Länge der Schubstreben 11, 11' mittels der zugeordneten Justageeinrichtungen 33, 33' ebenfalls verkürzen.

Im letzten Justageschritt werden die hinteren Rolleinrichtungen 2b, 2b' analog zu der Darstellung aus Figur 8a in Richtung der vorderen Rolleinrichtung 2a verschwenkt.

Hinsichtlich des vorangehend beschriebenen Faltvorganges zweier unterschiedlicher Ausführungsformen des erfindungsgemäßen Transportwagens ist noch zu betonen, dass die in den Figuren 6a bis 8b nicht dargestellte Aufnahmeeinrichtung 4 für zu transportierende Personen und/oder Güter entweder vor dem Zusammenfalten des Transportwagens aus dem Wagenrahmen 1 herausgelöst wird oder derart ausgebildet ist, dass sie sich zusammen mit dem Wagenrahmen 1 falten lässt. Insbesondere eine als Kindersitz ausgestaltete Aufnahmeeinrichtung 4 lässt sich beispielsweise aus textilem Material herstellen und derart ausbilden, dass sich der Wagenrahmen 1 zusammen mit dem Kindersitz gemäß den in den Figuren 6a bis 8b dargestellten Ablaufs falten lässt.

Die vordere Rolleinrichtung 2a ist vorzugsweise, wie in Figur 3 dargestellt, verschwenkbar ausgebildet. Dadurch lässt sich für die in den Figuren 6a bis 8b gezeigten Ausführungsformen des Transportwagens beim Zusammenklappen des Wagenrahmens 1 ein noch kleineres Packmaß erzielen. Zusätzlich zu den in den Figuren 6a bis 8b gezeigten Faltungsschritten kommt dann noch das Verschwenken der vorderen Rolleinrichtung 2a gemäß der Darstellung in Figur 3.

Figur 9 zeigt eine detaillierte Ansicht der relativ zur Transportrichtung T linken hinteren Rolleinrichtung 2b mit der Federungsvorrichtung 21. Das Rad 20b der Rolleinrichtung 2b ist um eine Achse X drehbar in einem an der Achse X angeordnetes Lagerelement 213 gelagert. Vom oberen und vom unteren Endabschnitt des Lagerelementes 213 erstrecken sich zwei parallel zueinander angeordnete, im wesentlichen gleichlange Schwenkarme 211 und 212. Die Schwenkarme 211, 212 sind mit ihrem dem Lagerelement 213 zugewanden Ende um eine im wesentlichen senkrecht zur Achse X und im wesentlichen horizontal ausgerichteten Achse schwenkbar am Lagerelement 213 angelenkt. Die dem Lagerelement 213 abgewandten Enden der Schwenkarme sind jeweils um parallel angeordnete Achsen schwenkbar im unteren Endbereich der Stützstrebe 12 am Wagenrahmen 1 angelenkt. Die beiden Schwenkarme 211, 212 beschreiben in dieser Anordnung zwei gegenüberliegende Kanten eines Parallelogrammes, das durch die verschwenkbare Anlenkung der Schwenkarme 211, 212 bei einer Bewegung des Rades 20b relativ zum Wagenrahmen 1 verschert. Um diese Scherbewegung zu federn und zu dämpfen ist zwischen den beiden Schwenkarmen 211, 212 ein Querarm 214 angeordnet, dessen unteres Ende an einer aus dem unteren Ende der Stützstrebe 12 ragenden Federstange 215 angelenkt ist. Die Federstange 215 steht mit einem in im Innern der Stützstrebe 12 angeordneten Federelement derart in Wirkverbindung, dass das Federelement beim Hineinbewegen der Federstange 215 in die Stützstrebe 12 eine der Bewegungsrichtung der Federstange 215 entgegengesetzte Kraft aufbringt. Bei einer Relativbewegung des Rades 20b zur Stützstrebe 12 verursacht die Verscherung der Schwenkarme 211, 212 daher eine entsprechende Relativbewegung des Querarmes 214 zur Stützstrebe 12. Dadurch, dass der Querarm 214 an der. Federstrebe 215 angelenkt ist, wird die Relativbewegung zwischen Querarm 214 und Stützstrebe 12 in eine Relativbewegung zwischen Federstrebe 215 und Stützstrebe 12 umgesetzt.

Die in Figur 9 dargestellte Aufhängung der Hinterräder 20b und 20b' weist weiterhin den Vorteil auf, dass zunehmendes Gewicht des zu transportierenden Gutes und/oder der zu transportierenden Person auch im Ruhezustand des Transportwagens zu einem verstärkten Einfedern der Federstrebe 215 in die Stützstrebe 12 und somit aufgrund der sich nach oben bewegenden Schwenkarme 211, 212 zu einem größeren Abstand zwischen den beiden Hinterräder 20b und 20b' führt. Dadurch erhöht sich die Kippstabilität des Transportwagens automatisch bei einer Erhöhung der Transportlast.

Drehfest mit der Achse X verbunden weist die Rolleinrichtung 2b weiterhin eine Bremsscheibe 251 auf. Die Rotation dieser Bremsscheibe 251 lässt sich in üblicher Weise mittels einer in Figur 9 nicht dargestellter, am Lagerelement 213 angeordneter Bremsvorrichtung 25 abbremsen.

Das in Figur 9 ebenfalls nicht dargestellte, im Innern der Stützstrebe angeordnete Federelement lässt sich sowohl rein mechanisch als auch pneumatisch oder hydraulisch ausbilden und wirkt neben der Federeigenschaft gleichzeitig auch als Stoßdämpfer. Die gesamte Federungsvorrichtung 21 lässt sich derart ausbilden, dass der Federweg, d.h. die Relativbewegung zwischen Federstange 215 und Stützstrebe 12 mindestens ein Fünftel des Raddurchmessers des Rades 20b ausmacht. Dadurch ist es problemlos möglich beim erfindungsgemäßen Transportwagen anstelle defektanfälliger, wartungsintensiver Luftbereifung beispielsweise eine wartungsfreie Vollgummibereifung des Rades 20b vorzusehen oder vollständig auf eine Bereifung zu verzichten und Räder aus Kunststoff oder Metall vorzusehen.

Die in Figur 9 gezeigte Federungsvorrichtung 21 ist an der zweiten hinteren Rolleinrichtung 2b' entsprechend gespiegelt angeordnet.

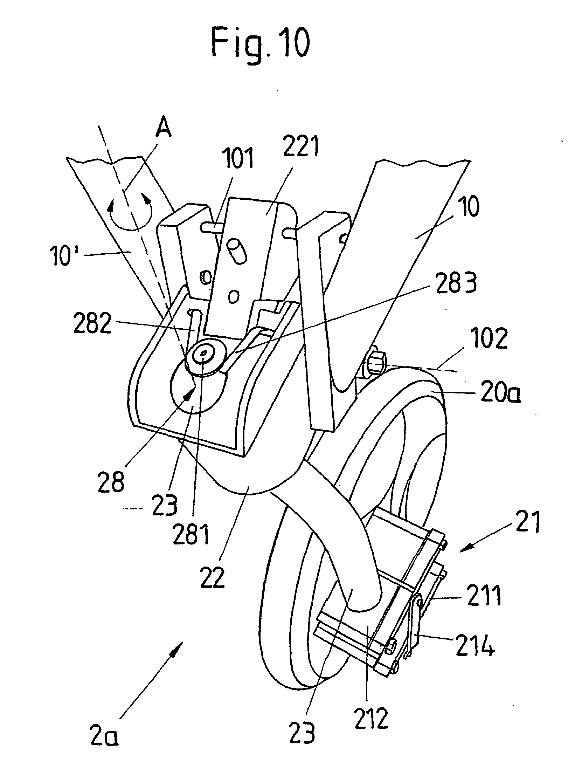

Wie in Figur 10 dargestellt weist auch die vordere Rolleinrichtung 2a eine Federungsvorrichtung 21 auf, wie sie in Figur 9 beschrieben ist. Dabei sind die Schwenkarme 211, 212 an der vorderen Rolleinrichtung 2a entsprechend am Lagerarm 23 des Vorderrades 20a schwenkbar angelenkt, wobei das Lagerelement 213 zusammen mit dem Vorderrad 20a im Vergleich zu der Darstellung in Figur 9 um 90° gedreht angeordnet ist. Das der Federungsvorrichtung 21 der vorderen Rolleinrichtung 2a zugeordnete Federelement ist entsprechend im Innern des unteren Endabschnitts des Lagerarmes 23 des Vorderrades 20a angeordnet.

Das obere Ende des Lagerarmes 23 ist, wie bereits in Figur 1 dargestellt, in einer an den vorderen V-förmig zusammenlaufenden Enden der Hauptstreben 10, 10' angeordneten Lagereinrichtung 22 um eine im wesentlichen senkrecht angeordnete Achse A schwenkbar gelagert. Im Bereich der Lagereinrichtung 22 weist die vordere Rolleinrichtung 2a eine Rückführeinrichtung 28 auf. Diese Rückführeinrichtung 28 umfasst einen, auf dem oberen Ende des Lagerarmes 23 exzentrisch zur Drehachse A angeordneten Exzenterbolzen 281 und zwei am Exzenterbolzen 281 anliegende Rückstellelemente 282, 283. Die Rückstellelemente 282, 283 sind länglich ausgebildet, wobei deren eines Ende am Exzenterbolzen 281 anliegt und das andere Ende an der Lagereinrichtung 22 fixiert ist. In der Geradeausstellung des Vorderrades 20a, d.h. bei dessen im wesentlichen paralleler Ausrichtung zu den Hinterrädern 20b, 20b', ist der Exzenterbolzen 281 im wesentlichen symmetrisch zu den beiden Rückstellelementen 282, 283 angeordnet und die Rückstellelemente 282, 283 üben keinerlei Kraft auf den Exzenterbolzen 281 aus.

Bei einer Drehung des Vorderrades 20a und somit des Lagerarmes 23 um die Achse A lenkt der Exzenterbolzen 281 eines der beiden Rückstellelemente 282, 283 quer zu dessen Erstreckungsrichtung aus. Das mit seinem, dem Exzenterbolzen 281 abgewandten Ende an der Lagereinrichtung 22 fixierte ausgelenkte Rückstellelement 282, 283 ist aus einem biegeelastischen Material, beispielsweise aus einem geeigneten Stahl ausgebildet, so dass das ausgelenkte, d.h. gebogene Rückstellelement 282, 283 auf den Exzenterbolzen 281 eine Kraft ausübt. Aufgrund der exzentrischen Anordnung des Exzenterbolzens 281 relativ zur Drehachse A bewirkt die vom Rückstellelement 282, 283 ausgeübte Rückstellkraft ein auf die Geradausstellung des Vorderrades entsprechende Lage des Exzenterbolzens 281 gerichtetes Drehmoment. Die den Transportwagen bewegende Person muss daher zum Auslenken des Vorderrades 20a des Transportwagens über die Griffvorrichtungen 14, 14' bzw. über die Koppelelemente 16, 16' ein Drehmoment ausüben, das größer ist, als das durch die Rückstelleinrichtung 28 erzeugte Rückstelldrehmoment. Durch die Rückstelleinrichtung 28 wird nach einem Lenkvorgang des Transportwagens die Rückführung des Vorderrades 20a in die Geradeausstellung erleichtert.

Außerdem dient die Rückstelleinrichtung 28 zur Spurstabilisierung des Transportwagens während des Bewegens entlang einer Transportrichtung T. Durch die Rückstelleinrichtung wird verhindert, dass insbesondere beim schnellen Bewegen des Transportwagens im Gelände durch Bodenunebenheiten verursachte, auf das Vorderrad 20a wirkende Drehmomente zu einem plötzlichen, starken Auslenken des Vorderrades 20a führen. Derartige unerwünschte Bewegungen des Vorderrades 20a können besonders beim schnellen Bewegen des Transportwagens zu einem Umkippen des Wagens führen. Als weitere Sicherheit ist vorgehen, die Lagereinrichtung 22 des Vorderrades 20a derart auszubilden, dass das Vorderrad 20a aus der Geradeausstellung ausschließlich in einem Winkelbereich von rund 80° nach links und rund 80° nach rechts drehbar gelagert ist.

Es ist klar, dass sich die Rückstelleinrichtung 28 auch mit Rückstellelementen 282, 283 ausbilden lässt, die als Blatt- oder Spiralfedern ausgebildet sind. Wesentlich ist lediglich das vorangehend beschriebene funktionelle Zusammenwirken der Bauelemente der Rückstelleinrichtung 28, die insbesondere die gewünschte Spurstabilisierung erzielt.

Die in Figur 10 dargestellte vordere Rolleinrichtung 2a ist, wie bereits im Zusammenhang mit Figur 3 beschrieben, um eine im Bereich der Lagereinrichtung 22 zugewandten Enden der Hauptstreben 10, 10' angeordnete im wesentlichen horizontal verlaufende Verschwenkachse 102 verschwenkbar ausgebildet. In der in Figur 10 gezeigten Darstellung ist die vordere Rolleinrichtung 2a mittels eines an der Lagereinrichtung 22 angeordneten Fixierelementes 221 gegen ein Verschwenken um die Verschwenkachse 102 gesichert. Dazu ist das Fixierelement 221 lösbar mit einem zwischen den Endbereichen der Hauptstreben 10, 10' verlaufenden Querträger 101 verbunden. Dadurch, dass beide Hauptstreben 10, 10' über das Fixierelement 221 mechanisch mit der Lagereinrichtung 22 und dem Lagerarm 23 gekoppelt sind, werden die auf das Vorderrad einwirkenden, nicht abgefederten Kräfte in beide Hauptstreben 10, 10' eingeleitet.

Soll die vordere Rolleinrichtung 2a zusammen mit der am Wagenrahmen 1 angeordneten Lagereinrichtung um die Verschwenkachse 102 in Richtung des pyramidenähnlichen Käfigs des Wagenrahmens 1 verschwenkt werden, muss das Fixierelement 221 zuvor vom Querträger 101 gelöst werden. In der für die Verwendung als Fahrzeuganhänger vorgesehenen verschwenkten Position ist die vordere Rolleinrichtung 2a über in Figur 10 nicht dargestellte Fixiermittel am Wagenrahmen lösbar fixiert.

Im Zusammenwirken der vorangehend beschriebenen Merkmale, d.h. der Radstandseinstellung, der Federungsvorrichtung der Rolleinrichtungen, der nach oben verschwenkbaren vorderen Rolleinrichtung und der Rückführeinrichtung des Vorderrades wird ein an die jeweils benötigten Bedingungen anpassbarer, dadurch sehr flexibel einsetzbarer Transportwagen bereitgestellt, der robust und geländegängig ausgebildet ist. Aufgrund des zusammenklappbaren Wagenrahmenaufbaus ist der Transportwagen zudem noch auf ein sehr kleines Packmaß zusammenlegbar und eignet sich somit insbesondere für den Transport in motorisierten Fahrzeugen.

## Patentansprüche

1. Transportwagen für den Transport von Personen, insbesondere für den Transport von Kindern, mit:
einem aus Verstrebungselementen (10, 10', 11, 11', 12, 12', 13, 13', 133) aufgebauten Wagenrahmen (1) und
mindestens drei am Wagenrahmen (1) vorgesehenen Rolleinrichtungen (2a, 2b, 2b') mit Rädern (20a, 20b, 20b') zum Rollen des Transportwagens entlang einer Transportrichtung (T) auf einem Untergrund,
wobei eine der Rolleinrichtungen als vordere Rolleinrichtung (2a) bezogen auf die Transportrichtung (T) des Transportwagens vor den anderen beiden, hinteren Rolleinrichtungen (2b, 2b') am Wagenrahmen (1) angeordnet ist und sich der Radstand zwischen der vorderen Rolleinrichtung (2a) und den hinteren Rolleinrichtungen (2b, 2b') durch eine Verstelleinrichtung (11, 11') des Wagenrahmens (1) einstellen lässt,
**dadurch gekennzeichnet,**
**dass** der Wagenrahmen (1) zwei Hauptstreben (10,10') aufweist, die ausgehend aus dem Bereich oberhalb jeder der beiden hinteren Rolleinrichtungen (2b, 2b') in Richtung der vorderen Rolleinrichtung (2a) im Wesentlichen V-förmig zusammenlaufend angeordnet sind, und die zwei Hauptstreben (10, 10') im Falle eines Umkippens des Transportwagens **dadurch** als Überrollbügel dienen, dass der Wagenrahmen (1) im Bereich zwischen der Rolloberfläche des Transportwagens und den Hauptstreben (10, 10') einen Passagierraum zur Aufnahme der zu transportierenden Person aufweist.

2. Transportwagen gemäß Anspruch 1, **dadurch gekennzeichnet, dass** die Hauptstreben (10, 10') konkav nach oben gewölbt ausgebildet sind.

3. Transportwagen gemäß Anspruch 1 oder 2, **dadurch gekennzeichnet, dass** zwischen den beiden oberhalb der hinteren Rolleinrichtungen (2b, 2b') angeordneten Endabschnitten der Hauptstreben (10, 10') und jeweils einer der darunter angeordneten hinteren Rolleinrichtung (2b, 2b') eine Stützstrebe (12,12') des Wagenrahmens (1) angeordnet ist.

4. Transportwagen gemäß Anspruch 3, **dadurch gekennzeichnet, dass** zwischen der relativ zur Transportrichtung (T) linken Hauptstrebe (10) und der linken Stützstrebe (12), eine linke Schubstrebe (11) und zwischen der rechten Hauptstrebe (10') und der rechten Stützstrebe (12') eine rechte Schubstrebe (11') angeordnet ist.

5. Transportwagen gemäß Anspruch 3 oder 4, **dadurch gekennzeichnet, dass** zwischen den beiden Stützstreben (12,12') mindestens eine Querstrebe (13,13') angeordnet ist.

6. Transportwagen gemäß Anspruch 5, **dadurch gekennzeichnet,dass** die Stützstreben (12,12') mit den Hauptstreben (10, 10') und die Schubstreben (11, 11') mit den Hauptstreben (10,10') und mit den Stützstreben (12, 12') über Gelenkeinrichtungen (30, 30', 31, 31') aneinander befestigt sind, und wobei die Stützstreben (12, 12') vorzugsweise in ihrer Länge verstellbar ausgebildet sind.

7. Transportwagen gemäß einem der Ansprüche 5 oder 6, **dadurch gekennzeichnet, dass** die Querstreben (13, 13') in ihrer Mitte ein arretierbares Faltgelenk (32, 32') aufweisen und dass die Endabschnitte der beiden Hauptstreben (10, 10') im Bereich der vorderen Rolleinrichtung (2a) zueinander beweglich angelenkt sind.

8. Transportwagen gemäß Anspruch 7, **dadurch gekennzeichnet, dass** die Endabschnitte der beiden Hauptstreben (10, 10') im Bereich der vorderen Rolleinrichtung (2a) mittels eines Kardangelenkes gekoppelt sind.

9. Transportwagen gemäß einem der Ansprüche 6 bis 8, **dadurch gekennzeichnet, dass** die Schubstreben (11,11') mittels einer entlang der zugeordneten Hauptstrebe (10, 10') verschiebbaren und an der Hauptstrebe (10, 10') fixierbaren Gelenkeinrichtung (30, 30') an den Hauptstreben (10, 10') lösbar fixiert sind.

10. Transportwagen gemäß einem der Ansprüche 4 bis 9, wenn abhängig von Anspruch 4, **dadurch gekennzeichnet, dass** eine Aufnahmeeinrichtung (4) für eine zu transportierende Person an den Schubstreben (11, 11 ') und/oder an den Hauptstreben (10, 10') fixiert ist.

## Claims

1. A transport cart for transporting persons, in particular for transporting children, comprising:
a cart frame (1) built up from strutting elements (10, 10', 11, 11', 12, 12', 13, 13', 133), and
at least three roller devices (2a, 2b, 2b') provided at the cart frame (1) with wheels (20a, 20b, 20b') for rolling the transport cart along a transport direction (T) on a surface, wherein one of the roller devices is arranged at the cart frame (1) as a front roller device (2a) with reference to the transport direction (T) of the transport carts in front of the two other, rear roller devices (2b, 2b'), and wherein the wheel base between the front roller device (2a) and the rear roller devices (2b, 2b') can be adjusted by an adjustment device (11, 11') of the cart frame (1),
**characterized by**
that the cart frame (1) comprises two main struts (10, 10'), which starting from the area above each of the two rear roller devices (2b, 2b') in the direction of the front roller device (2a) in an essentially V-type converging manner, and the two main struts (10, 10') serve, in the case of a falling-over transport cart, as a safety bar by that the cart frame (1) comprises in the area between the rolling surface of the transport cart and the main struts (10, 10') a passenger space for receiving the person to be transported.

2. The transport cart according to claim 1, **characterized by** that the main struts (10, 10') are concavely curved upwards.

3. The transport cart according to claim 1 or 2, **characterized by** that between the two final sections of the main struts (10, 10') arranged above the rear roller devices (2b, 2b') and one of the rear roller device (2b, 2b') respectively arranged underneath, a support strut (12, 12') of the cart frame (1) is arranged.

4. The transport cart according to claim 3, **characterized by** that between the left-hand main strut (10) relative to the transport direction (T) and the left-hand support strut (12), a left-hand sliding strut (11) is arranged, and between the right-hand main strut (10') and the right-hand support strut (12'), a right-hand sliding strut (11') is arranged.

5. The transport cart according to claim 3 or 4, **characterized by** that between the two support struts (12, 12') at least one transverse strut (13, 13') is arranged.

6. The transport cart according to claim 5, **characterized by** that the support struts (12, 12') with the main struts (10, 10') and the sliding struts (11, 11') with the main struts (10, 10') and the support struts (12, 12') are attached to each other by hinge devices (30, 30', 31, 31'), and that the support struts (12, 12') preferably have an adjustable length.

7. The transport cart according to one of claims 5 or 6, **characterized by** that the transverse struts (13, 13') comprise at their center a lockable folding hinge (32, 32'), and that the final sections of the two main struts (10, 10') are movably articulated with respect to each other in the area of the front roller device (2a).

8. The transport cart according to claim 7, **characterized by** that the final sections of the two main struts (10, 10') are coupled in the area of the front roller device (2a) by means of a Cardan joint.

9. The transport cart according to one of claims 6 to 8, **characterized by** that the sliding struts (11, 11') are detachably fixed at the main struts (10, 10') by means of a hinge device (30, 30') being displaceable along the respective main strut (10, 10') and being attachable to the main strut (10, 10').

10. The transport cart according to one of claims 4 to 9, if dependent from claim 4, **characterized by** that a receiving device (4) for a person to be transported is attached to the sliding struts (11, 11') and/or to the main struts (10, 10').

## Revendications

1. Véhicule de transport pour le transport de personnes, en particulier pour le transport d'enfants, comprenant:
un cadre de véhicule (1) constitué par des éléments d'entretoisement (10, 10', 11, 11', 12, 12', 13, 13', 133), et
au moins trois dispositifs de roulement (2a, 2b, 2b') prévus au cadre de véhicule (1) avec des roues (20a, 20b, 20b') pour rouler le véhicule de transport le long d'une direction de transport (T) sur une surface, un des dispositifs de roulement étant arrangé au cadre de véhicule (1) comme un dispositif de roulement avant (2a) par rapport à la direction de transport (T) du véhicule de transport avant les deux autres dispositifs de roulement arrière (2b, 2b'), et l'empattement entre le dispositif de roulement avant (2a) et les dispositifs de roulement arrière (2b, 2b') pouvant être ajusté par un dispositif d'ajustage (11, 11') du cadre de véhicule (1),
**caractérisé en ce**
**que** le cadre de véhicule (1) comprend deux entretoises principales (10, 10'), qui commençant par la région au-dessus de chaque des deux dispositifs de roulement arrière (2b, 2b') dans la direction du dispositif de roulement avant (2a) d'une manière essentiellement convergente à V, et les deux entretoises principales (10, 10') servent, dans le cas d'un véhicule de transport qui verse, d'un arceau de sécurité par ce que le cadre de véhicule (1) comprend dans la région entre la surface de roulement du véhicule de transport et les entretoises principales (10, 10') un espace de passager pour le logement de la personne à être transportée.

2. Véhicule de transport selon la revendication 1, **caractérisé en ce que** les entretoises principales (10, 10') sont courbées concavement vers le haut.

3. Véhicule de transport selon la revendication 1 ou 2, **caractérisé en ce qu'**entre les deux sections finales des entretoises principales (10, 10') arrangées au-dessus des dispositifs de roulement arrière (2b, 2b') et un des dispositifs de roulement arrière (2b, 2b') respectivement arrangé au-dessous, une entretoise de support (12, 12') du cadre de véhicule (1) est arrangée.

4. Véhicule de transport selon la revendication 3, **caractérisé en ce qu'**entre l'entretoise principale gauche (10) par rapport à la direction de transport (T) et l'entretoise de support gauche (12), une entretoise de poussée gauche (11), et entre l'entretoise principale droite (10') et l'entretoise de support droite (12'), une entretoise de poussée droite (11') est arrangée.

5. Véhicule de transport selon la revendication 3 ou 4, **caractérisé en ce qu'**entre les deux entretoises de support (12, 12') au moins une entretoise transversale (13, 13') est arrangée.

6. Véhicule de transport selon la revendication 5, **caractérisé en ce que** les entretoises de support (12, 12') avec les entretoises principales (10, 10') et les entretoises de poussée (11, 11') avec les entretoises principales (10, 10') et les entretoises de support (12, 12') sont fixées les unes aux autres par des dispositifs d'articulation (30, 30', 31, 31'), et que les entretoises de support (12, 12') de préférence ont une longueur ajustable.

7. Véhicule de transport selon une des revendications 5 ou 6, **caractérisé en ce que** les entretoises transversales (13, 13') comprennent à leurs centres une articulation de pliage (32, 32') arrêtable, et que les sections finales des deux entretoises principales (10, 10') sont articulées l'une par rapport à l'autre dans la région du dispositif de roulement avant (2a).

8. Véhicule de transport selon la revendication 7, **caractérisé en ce que** les sections finales des deux entretoises principales (10, 10') sont couplées dans la région du dispositif de roulement avant (2a) au moyen d'un joint de Cardan.

9. Véhicule de transport selon une des revendications 6 à 8, **caractérisé en ce que** les entretoises de poussée (11, 11') sont fixées détachablement aux entretoises principales (10, 10') au moyen d'un dispositif d'articulation (30, 30') étant déplaçable le long de l'entretoise principale (10, 10') respective et étant fixable à l'entretoise principale (10, 10').

10. Véhicule de transport selon une des revendications 4 à 9, si dépendante de la revendication 4, **caractérisé en ce qu'**un dispositif de réception (4) pour une personne à être transportée est fixé aux entretoises de poussée (11, 11') et/ou aux entretoises principales (10, 10').
